# DEMANDE DE BREVET EUROPEEN

(11) **EP 0 580 499 A1**
(43) Date de publication de la demande: **26.01.1994**
(21) Numéro de dépôt: 93401869.8
(22) Date de dépôt: 20.07.1993
(51) Int. Cl.: H04B 3/32

(54) **Procédé pour réduire la diaphonie entre une ligne différentielle et une ligne non différentielle raccordées aux bornes d'un connecteur multi-points**

(30) Priorité: 22.07.1992 FR 9209049
(71) Demandeur: ALCATEL CIT, F-75008 Paris (FR)
(72) Inventeur: Le Nohaic, Yves-Noel, F-22420 Plouaret (FR); Speisser, Michel, F-67200 Strasbourg (FR)
(74) Mandataire: Pothet, Jean Rémy Emile Ludovic

(57) **Abrégé**

Un procédé pour réduire la diaphonie entre une ligne différentielle (3) et une ligne non différentielle (4) raccordées aux bornes (2) d'un connecteur multi-points (1), caractérisé par un raccordement parallèle de la ligne non différentielle à deux bornes du connecteur de manière à obtenir des inductions électromagnétiques en mode commun identiques engendrées par la ligne non différentielle sur la ligne différentielle. Application aux transmissions numériques simultanées à hauts et à bas débits.

## Description

L'invention concerne un procédé pour réduire la diaphonie entre une ligne différentielle (paire différentielle) et une ligne non différentielle raccordées aux bornes d'un connecteur multi-points non coaxial.

Elle s'applique notamment aux transmissions simultanées de signaux numériques à hauts débits sur la ligne différentielle et à bas débits sur la ligne non différentielle. Ce type de transmission est de plus en plus mis en oeuvre dans les auto-commutateurs numériques à hauts débits large bande. Le connecteur multi-points recevant les lignes est le plus souvent disposé sur un fond de panier des cartes de circuit imprimé.

Les signaux numériques à bas débits ont généralement des niveaux logiques allant de 0 à 5 V tandis que les signaux numériques à hauts débits ont des niveaux logiques de l'ordre de 800 mV. Etant donnée la disparité des niveaux logiques existant entre ces deux types de signaux cohabitant ensemble au niveau d'un connecteur multi-points, certaines bornes libres du connecteur étaient raccordées jusqu'à présent à la masse pour isoler la ligne différentielle de la ligne non différentielle afin de réduire la diaphonie entre ces deux lignes. Cette diaphonie résulte de l'induction en mode commun exercée par la ligne non différentielle sur la ligne différentielle. L'isolation emploie généralement plusieurs bornes du connecteur ce qui diminue d'autant le nombre de bornes exploitables pour la transmission des signaux.

Le but de l'invention est de remédier à cet inconvénient.

A cet effet, l'invention a pour objet un procédé pour réduire la diaphonie entre une ligne différentielle et une ligne non différentielle raccordées aux bornes d'un connecteur multi-points, caractérisé par un raccordement parallèle de la ligne non différentielle à deux bornes du connecteur de manière à obtenir des inductions électromagnétiques en mode commun identiques engendrées par la ligne non différentielle sur la ligne différentielle.

La réduction de la diaphonie selon l'invention emploie en conséquence seulement une borne libre du connecteur ce qui représente un gain en nombre de bornes important vis-à-vis de la solution de l'art antérieur.

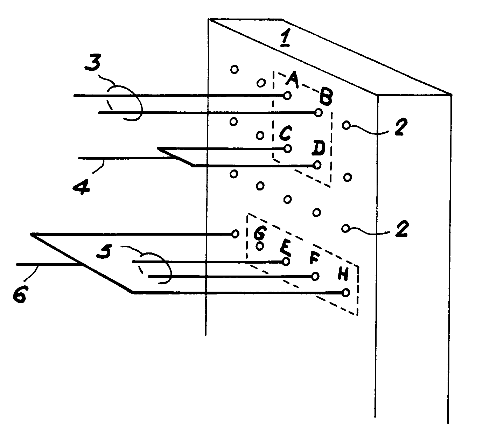

D'autres caractéristiques et avantages de l'invention apparaîtront dans la description qui suit d'un exemple de réalisation de l'invention faite en référence à la figure qui représente schématiquement un connecteur multi-points auquel sont reliées une ligne différentielle et une ligne non différentielle.

Sur cette figure, le connecteur 1 est montré comprenant un réseau de bornes de connexion 2. Un exemple d'un tel connecteur dit connecteur "METRAL" est vendu par la société DU PONT. Une première ligne différentielle symétrique 3 est représentée reliée à deux bornes connexes A et B du connecteur 1. Cette ligne permet la transmission de signaux numériques à hauts débits, par exemple à 150 Mbit/s.

Une ligne non différentielle 4 est aussi représentée reliée à une borne C du connecteur à proximité de la borne A et en dessous de celle-ci. Cette ligne permet la transmission de signaux numériques à bas débits, par exemple à 50 Mbit/s. La disposition dans l'espace de la ligne non différentielle 4 vis-à-vis de la ligne différentielle 3 engendre un couplage électromagnétique en mode commun plus important entre les bornes A et C qu'entre les bornes B et C du connecteur. Il en résulte une diaphonie entre les deux lignes.

Pour réduire cette diaphonie, la ligne non différentielle 4 est reliée en parallèle à deux bornes C et D du connecteur de manière à obtenir des inductions électromagnétiques en mode commun identiques ( en phase et en amplitude) engendrées par la ligne non différentielle sur la ligne différentielle. La borne D située à proximité de la borne B et en dessous de celle-ci permet que les signaux parasites prenant naissance en mode commun par induction depuis la borne C vers les bornes A et B et depuis la borne D vers les bornes A et B aient le même niveau et la même phase et soient détruits par le mode différentiel du fait de la symétrie du montage. le procédé permet de réduire les interférences d'induction en mode commun à quelques millivolts.

Le raccordement de la ligne non différentielle et de la ligne différentielle aux bornes A,B,C,D définit une topologie en rectangle des bornes de connexion. De façon analogue, les bornes C et D reliées à la ligne non différentielle pourraient être celles placées au-dessus des bornes A et B reliées à la ligne différentielle (montage symétrique au montage précédent)

Un raccordement équivalent définissant une topologie en ligne des bornes de connexion E,F,G,H est montré pour une seconde ligne différentielle 5 et une seconde ligne non différentielle 6.

Le procédé selon l'invention permet de réduire facilement la diaphonie entre une ligne différentielle et une ligne non différentielle au niveau d'un connecteur multi-points tout en laissant disponible un grand nombre de bornes du connecteur.

## Revendications

**1.** **)** Un procédé pour réduire la diaphonie entre une ligne différentielle (3) et une ligne non différentielle (4) raccordées aux bornes (2) d'un connecteur multi-points (1), caractérisé par un raccordement parallèle de la ligne non différentielle à deux bornes du connecteur de manière à obtenir des inductions électromagnétiques en mode commun identiques engendrées par la ligne non différentielle sur la ligne différentielle.

**2.** **)** Le procédé selon la revendication 1, dans lequel le raccordement parallèle de la ligne non différentielle et de la ligne différentielle définit une topologie en rectangle des bornes du connecteur.

**3.** **)** Le procédé selon la revendication 1, dans lequel le raccordement parallèle de la ligne non différentielle et de la ligne différentielle définit une topologie en ligne des bornes du connecteur.
